(19) Europäisches Patentamt
European Patent Office
Office européen des brevets

(11) EP 4 296 085 A1

(12) EUROPEAN PATENT APPLICATION

(43) Date of publication:
**27.12.2023 Bulletin 2023/52**

(21) Application number: **23176209.7**

(22) Date of filing: **30.05.2023**

(51) International Patent Classification (IPC):
***B60C 1/00*** *(2006.01)* ***C08F 236/10*** *(2006.01)*
***C08L 9/06*** *(2006.01)* ***C08L 15/00*** *(2006.01)*

(52) Cooperative Patent Classification (CPC):
(C-Sets available)
**C08L 15/00; B60C 1/0016; C08F 236/10;**
**C08L 9/06;** C08F 236/06; Y02T 10/86 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022101543**

(71) Applicant: **Sumitomo Rubber Industries, Ltd.**
**Kobe-shi, Hyogo 651-0072 (JP)**

(72) Inventor: **KITAMURA, Naoya**
**Kobe-shi, Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) TIRE

(57) A tire having a tread portion, which can suppress deterioration in braking performance of tires on an icy road surface after repeated running; and the cap rubber layer forming the tread portion is formed from a rubber composition containing 40 parts by mass or more and 80 parts by mass or less of styrene-butadiene rubber (SBR) having a styrene content of 25% by mass or less in 100 parts by mass of the rubber component, containing silica and carbon black together with the rubber component, and having the loss tangent 30°C tan δ of less than 0.25 measured under the conditions of temperature of 30°C, frequency of 10 Hz, initial strain of 5%, dynamic strain rate of 1%, and deformation mode: tensile; in the rubber composition, the carbon black content is more than 15 parts by mass with respect to 100 parts by mass of the rubber component, and the ratio of the silica content to the carbon black content is 1 or more; and the thickness of the tread portion is 15 mm or less.

EP 4 296 085 A1

(52) Cooperative Patent Classification (CPC): (Cont.)

C-Sets
**C08F 236/10, C08F 4/48;**
**C08L 9/06, C08L 9/00, C08K 3/36, C08K 3/04, C08K 5/548;**
**C08L 15/00, C08L 7/00, C08L 9/00, C08K 3/36, C08K 3/04, C08K 5/548;**
**C08L 15/00, C08L 9/00, C08K 3/36, C08K 3/04, C08K 5/548;**
**C08L 15/00, C08L 9/06, C08L 9/00, C08K 3/36, C08K 3/04, C08K 5/548;**
**C08L 15/00, C08L 15/00, C08L 9/06, C08L 9/00, C08K 3/36, C08K 3/04, C08K 5/548;**
C08F 236/06, C08F 212/08

## Description

[TECHNICAL FIELD]

The present invention relates to tires.

[BACKGROUND ART]

Tires are required to have high braking performance from the standpoint of safety, and various techniques have been proposed for improving braking performance (for example, Patent documents 1 to 3).

[Prior art documents]

[Patent document]

[Patent document 1] JP-2011-93386 A-
[Patent document 2] JP-2013-79017 A-
[Patent document 3] JP-2016-37100 A-

[SUMMARY OF INVENTION]

[PROBLEM TO BE SOLVED BY THE INVENTION]

However, the surface of the tread portion of the tire wears as it runs, causing slippage on the road surface and gradually deteriorating the braking performance. Driving on icy roads with such tires with degraded braking performance is highly likely to lead to an accident. Hence, it is strongly desired to suppress the deterioration in braking performance on an icy road surface of a tire that has been repeatedly run.
Accordingly, an object of the present invention is to suppress deterioration in braking performance of tires on an icy road surface after repeated running.

[MEANS FOR SOLVING THE PROBLEM]

The present invention is

a tire having a tread portion, wherein
the cap rubber layer forming the tread portion is formed from a rubber composition containing 40 parts by mass or more and 80 parts by mass or less of styrene-butadiene rubber (SBR) having a styrene content of 25% by mass or less in 100 parts by mass of the rubber component, containing silica and carbon black together with the rubber component, and having the loss tangent 30°C tan $\delta$ of less than 0.25 measured under the conditions of temperature of 30°C, frequency of 10 Hz, initial strain of 5%, dynamic strain rate of 1%, and deformation mode: tensile;
in the rubber composition, the carbon black content is more than 15 parts by mass with respect to 100 parts by mass of the rubber component, and the ratio of the silica content to the carbon black content is 1 or more;
and the thickness of the tread portion is 15 mm or less.

[EFFECT OF THE INVENTION]

According to the present invention, it is possible to suppress deterioration in braking performance of tires on an icy road surface after repeated running.

[EMBODIMENTS FOR CARRYING OUT THE INVENTION]

[1] Features of the tire according to the present invention

First, the features of the tire according to the present invention will be explained.

1. Overview

The tire according to the present invention has a tread portion, and the cap rubber layer forming the tread portion is formed from a rubber composition which contains 40 parts by mass or more and 80 parts by mass of SBR having a styrene content of 25% by mass or less in in 100 parts by mass of the rubber component, and contains silica and carbon black together with a rubber component. The loss tangent 30°C tan δ of the rubber composition, measured under the conditions of temperature of 30°C, frequency of 10Hz, initial strain of 5%, dynamic strain rate of 1%, and deformation mode: tensile, is less than 0.25. Moreover, in this rubber composition, the content of carbon black is 15 parts by mass or more with respect to 100 parts by mass of the rubber component, and the ratio of the content of silica to the content of carbon black is 1 or more. Furthermore, the thickness of the tread portion is 15 mm or less.
Here, the cap rubber layer refers to a rubber layer provided on the outer side in the radial direction of the tire, but is not limited to the rubber layer forming the outermost layer of the tread portion. If there are two or more layers within 5mm from the tread surface toward the inside, at least any one layer satisfies the requirements of the rubber composition.
By having these features, as will be described later, it is possible to suppress deterioration in the braking performance of the tire on an icy road surface after repeated running.

2. Mechanism of effect manifestation in tire according to the present invention

The mechanism of effect manifestation in the tire according to the present invention is considered as follows.
As described above, the cap rubber layer of the tire according to the present invention contains 40 parts by mass or more and 80 parts by mass or less of SBR having a styrene content of 25% by mass or less in 100 parts by mass of the rubber component. As a result, a network of a small amount of styrene domains can be properly formed in the rubber matrix, and a scratching effect on icy road surfaces can be obtained, so that braking performance on icy road surfaces can be sufficiently exhibited.
Since SBR with such a low styrene content has a low heat build-up, it is possible to suppress the accumulation of frictional heat in the tread portion generated by friction between the tread portion and the icy road surface during rolling. As a result, even if the tread portion touches the icy road surface, there is no possibility that the ice on the icy road surface is melted to form a water film, resulting in deterioration of the braking performance.
In the present invention, the loss tangent 30°C tan δ of the rubber composition forming the cap rubber layer measured under the conditions of temperature of 30°C, frequency of 10 Hz, and initial strain of 5%, and dynamic strain rate of 1%, deformation mode: tensile is less than 0.25.
Loss tangent tan δ is a viscoelastic parameter that indicates energy absorption performance. The smaller the value, the more the heat generated inside the rubber during rolling can be suppressed. Therefore, by making the loss tangent 30°C tan δ of the rubber composition less than 0.25, it is possible to suppress heat accumulation in the tread portion, and as described above, there is no possibility that the ice on the icy road surface is melted to form a water film, resulting in deterioration of the braking performance, and braking performance on icy road surfaces can be fully exhibited.
Further, in the present invention, the rubber composition forming the cap rubber layer contains more than 15 parts by mass of carbon black with respect to 100 parts by mass of the rubber component, and contains silica such that the ratio of the content of silica to the content of carbon black is 1 or more.
By containing more than 15 parts by mass of carbon black with respect to 100 parts by mass of the rubber component, the rubber is sufficiently reinforced, reaction force is likely to occur inside the rubber against impact from the icy road surface, and it is possible to fully exhibit the braking performance on icy road surfaces.
By setting the ratio of the content of silica to the content of carbon black to 1 or more, that is by containing more silica than the content of carbon black, the tread portion is made to touch the icy road surface more flexibly and can be made to follow the surface easier. In addition, the interaction between the reinforcing agents and the rubber component makes it easier to generate a reaction force inside the rubber, so that the braking performance on the icy road surface can be sufficiently exhibited.
Furthermore, in the present invention, the thickness of the tread portion is set to 15 mm or less. By reducing the thickness of the tread portion in this way, the heat accumulated in the tread portion can be easily released during rolling. As a result, there is no possibility that the ice on the icy road surface is melted to form a water film, causing deterioration of the braking performance, as described above, and braking performance on icy road surfaces can be sufficiently exhibited.
As described above, in the present invention, it is considered that it is possible to suppress the deterioration of the braking performance of the tires on the icy road surface after repeated running due to the cooperation each other of

the effect of scratching the icy road surface and the effect of suppressing heat accumulation in the tread portion by containing an appropriate amount of SBR with a low styrene content,

the effect of suppressing heat accumulation by lowering 30°C tan δ,
the reaction force generation effect by containing an appropriate amount of carbon black,
the follow-up effect and reaction force generation effect by containing silica more than the content of carbon black, and
the heat dissipation effect by thinning the tread portion.

In the present invention, the styrene content is more preferably 21.9% by mass or less, further preferably 20% by mass or less, further preferably 15% by mass or less, and further preferably 14.5 % by mass or less. On the other hand, as the lower limit, it is preferably 3% by mass or more, more preferably 5% by mass or more, further preferably 8% by mass or more, and further preferably 10% by mass or more.

In the present invention, the phrase "contains 40 parts by mass or more and 80 parts by mass or less of SBR having a styrene content of 25% by mass or less in 100 parts by mass of the rubber component" indicates that the amount of SBR in 100 parts by mass of the rubber component is 40 parts by mass or more and 80 parts by mass or less, and the styrene content in the entire SBR is 25% by mass or less.

That is, when a styrene-containing polymer (SBR) is contained alone in the rubber component, it indicates that the styrene content in the polymer is 25% by mass or less, and when multiple styrene-containing polymers (SBR) are contained in the rubber component, it shows that the styrene content obtained from the sum of the product of the styrene content (mass%) in each polymer and the compounding amount (mass parts) per 100 mass parts of the rubber component of the polymer is 25 mass% or less.

More specifically, when 100 parts by mass of the rubber component contains SBR1 (X1 parts by mass) with a styrene content of S1 mass% and SBR2 (X2 parts by mass) with a styrene content of S2 mass%, it is indicated that the styrene content calculated from the formula $\{(S1 \times X1) + (S2 \times X2)\} / (X1+X2)$ is 25% by mass or less.

In addition, in the vulcanized rubber composition, it is possible to calculate by determining the amount of styrene contained in the rubber component after acetone extraction by solid-state nuclear magnetic resonance (solid-state NMR) or Fourier transform infrared spectrophotometer (FTIR).

In the present invention, the above-described 30°C tan δ is more preferably 0.24 or less, further preferably 0.22 or less, further preferably 0.21 or less, further preferably 0.20 or less, further preferably 0.19 or less, and further preferably 0.15 or less. Although the lower limit is not particularly limited, it is preferably 0.10 or more, more preferably 0.12 or more, further preferably 0.13 or more, and further preferably 0.14 or more.

Here, the loss tangent (tan δ) can be measured, for example, using a viscoelasticity measuring device such as "Eplexor (registered trademark)" series manufactured by GABO.

The 30°Ctan δ can be appropriately adjusted depending on the compounding materials described later. For example, the 30°Ctan δ can be increased by increasing the content of styrene in the rubber component, increasing the content of SBR in the rubber component, increasing the content of styrene in the SBR component, increasing the content of fillers such as silica and carbon black, and increasing the content of the resin component. Conversely, it can be lowered by reducing the content of styrene in the rubber component, reducing the content of SBR in the rubber component, reducing the content of styrene in the SBR component, reducing the content of fillers such as silica and carbon black, and reducing the content of the resin component.

In the present invention, the content of carbon black is more preferably 16 parts by mass or more, further preferably more than 20 parts by mass, further preferably 25 parts by mass or more, and further preferably more than 30 parts by mass with respect to 100 parts by mass of the rubber component. Although the upper limit is not particularly limited, it is preferably 70 parts by mass or less, more preferably 60 parts by mass or less, and further preferably 50 parts by mass or less. The ratio of the content of silica to the content of carbon black is more preferably 1.1 or more, further preferably 2.0 or more, further preferably 2.4 or more, and further preferably 2.5 or more. Although the upper limit is not particularly limited, it is preferably 2.9 or less, more preferably 2.8 or less, and further preferably 2.7 or less.

Furthermore, in the present invention, the thickness of the tread portion is more preferably 14 mm or less. As the lower limit, it is preferably more than 10 mm, and more preferably 12 mm or more.

Here, the "thickness of the tread portion" refers to the thickness of the tread portion on the tire equatorial plane in the cross section in the tire radial direction. When the tread portion is formed of a single rubber composition, it refers the thickness of the rubber composition, and in the case of a laminated structure of multiple rubber compositions, which will be described later, it refers to the total thickness of these layers.

When the tire has a groove on the equatorial plane, it refers to the thickness from the intersection of a straight line connecting the radially outermost end points of the groove with the tire equatorial plane to the radially innermost interface of the tread portion.

The tread portion is a member in the area forming the contact surface of the tire, and refers to a portion radially outside of members including fiber materials such as carcass, belt layer, and belt reinforcing layer. The thickness of the tread portion can be measured by aligning the bead portion with the standardized rim width in a cross section obtained by cutting the tire in the radial direction.

The "standardized rim" described above is a rim defined for each tire in the standard system including the

standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

[2] A more preferred embodiment of the tire according to the present invention

The tire according to the present invention can obtain even greater effects by adopting the following embodiments.

1. Glass transition temperature (Tg)

Since the rubber composition with a low glass transition temperature (Tg) suppresses heat generation at low temperatures, it becomes easier to suppress the heat accumulation in the tread portion described above, and the braking performance on the icy road surface of the tire after repeated running can be further demonstrated.

In the present invention, the glass transition temperature (Tg) is preferably -28 °C or lower, more preferably lower than -30°C, further preferably -40°C or lower, further preferably lower than -40°C, further preferably -41°C or lower, further preferably -42°C or lower, and further preferably -43°C or lower. Although the lower limit is not particularly limited, it is preferably -60°C or higher, more preferably -54°C or higher , even more preferably -50°C or higher , further preferably -45°C or higher , and further preferably -44°C or higher.

The glass transition temperature (Tg) of the rubber composition described above can be obtained from the temperature distribution curve of tan δ measured using a viscoelasticity measuring device such as "Eplexor (registered trademark)" series manufactured by GABO. Specifically, the temperature distribution curve of tan δ is measured under the conditions of frequency of 10 Hz, initial strain of 10%, amplitude of ±0.5%, and temperature increase rate of 2 °C/min, and the temperature corresponding to the largest tan δ value within the range of -60°C or higher and 40°C or lower in the measured temperature distribution curve is defined as the glass transition temperature (Tg). If there are two or more points with the largest tan δ value within the range of -60°C or higher and 40°C or lower, the point with the lowest temperature is taken as Tg. For example, in the present invention, if the tan δ peak is in the range of -60°C or higher and 40°C or lower, the peak temperature becomes the glass transition temperature (Tg) according to the above definition. In addition, for example, if the tan δ peak exists in the region below -60°C and a temperature distribution curve is obtained in which tan δ gradually decreases as the temperature rises within the range of -60°C or higher and 40°C or lower, the glass transition temperature (Tg) is -60°C by the definition above.

Further, the glass transition temperature (Tg) of the rubber composition can be adjusted by appropriately changing the content of each compounding material described later, similarly to the tan δ described above. For example, it can be increased by increasing the amount of SBR in the rubber component, increasing the styrene content in the SBR component, increasing the amount of the resin component, or using a resin component with a high softening point. Conversely, it can be lowered by reducing the amount of SBR in the rubber component, reducing the styrene content in the SBR component, reducing the amount of the resin component, or using a resin component with a low softening point.

2. Contains fine particle silica

As described above, in the present invention, the rubber composition constituting the cap rubber layer contains silica. In order to further improve the braking performance of tires on icy road surfaces after repeated running, more than 1/2 of the silica is preferably fine particle silica. By uniformly dispersing fine particle silica, the braking performance on icy road surfaces can be further improved.

Here, fine particle silica refers to silica having an average particle size of 18 nm or less, and the average particle size is more preferably 16 nm or less, and further preferably 15 nm or less. On the other hand, as the lower limit, it is preferably 6 nm or more, more preferably 9 nm or more, and further preferably 12 nm or more.

The above-mentioned average particle size is obtained by directly observing silica taken out from the rubber composition cut out from the tire using a transmission electron microscope (TEM) or the like. It can be calculated by calculating the equal cross-sectional area diameter from the area of each silica particle thus obtained, and obtaining the average value.

3. Contains a dispersant

In the present invention, the rubber composition forming the cap rubber layer preferably contains a dispersant together with silica. As a result, the silica is sufficiently dispersed in the rubber matrix, and the change in physical properties of the rubber at low temperatures can be reduced and flattened, and deterioration in braking performance of tires on an icy road surface after repeated running can be sufficiently suppressed.

4. Contains resin component

In the present invention, the rubber composition forming the cap rubber layer preferably contains a resin component.

By containing the resin component in the rubber composition, the tread portion exhibits a water-repellent effect, so that the braking performance of the tire on icy road surfaces after repeated running can be further improved.

Specific examples of the preferred resin components include rosin-based resins, styrene-based resins, coumarone-based resins, terpene-based resins, C5 resins, C9 resins, C5C9 resins, and acrylic resins, which will be described later. Among these, a styrene-based resin such as $\alpha$-methylstyrene is more preferred.

The content relative with respect to 100 parts by mass of the rubber component is preferably 1 part by mass or more, more preferably 2 parts by mass or more, and further preferably 3 parts by mass or more. As the upper limit, it is preferably 5 parts by mass or less, and more preferably 4 parts by mass or less.

5. Loss tangent at 0°C (0°C tan $\delta$)

In the above, 30°C tan $\delta$ is specified. Considering running on a low-temperature road surface such as an icy road surface, the loss tangent (0°C tan $\delta$) of the rubber composition forming the cap rubber layer measured under the conditions of temperature of 0°C, frequency of 10 Hz, initial strain of 5%, dynamic strain of 1%, and deformation mode: tensile is preferably 0.36 or less, more preferably 0.30 or less, further preferably 0.29 or less, further preferably 0.27 or less, further preferably 0.26 or less, further preferably 0.25 or less, and further preferably 0.24 or less. Although the lower limit is not particularly limited, it is preferably 0.16 or more, more preferably 0.18 or more, further preferably 0.20 or more, further preferably 0.21 or more, further preferably 0.22 or more, and further preferably 0.23 or more.

Incidentally, the 0°C tan $\delta$ described above can be appropriately adjusted by compounding materials described later, as in the case of 30°C tan $\delta$.

6. Multi-layered tread

In the present invention, the tread portion may be formed of only one layer of the cap rubber layer provided on the outer side in the tire radial direction, or may be formed of two layers by providing the base rubber layer on the inner side of the cap rubber layer in the tire radial direction. In addition, it may have three layers, four layers or more. In this case, the thickness of the cap rubber layer in the entire tread portion is preferably 10% or more. As a result, the friction generated between the tread surface and the road surface can be sufficiently transmitted to the inside of the tire, so it is considered that sufficient braking performance can be obtained. The thickness of the cap rubber layer in the entire tread portion is more preferably 70% or more.

Here, the "thickness of the cap rubber layer" refers to the thickness of the cap rubber layer on the tire equatorial plane in the tire radial cross section. In case the tire has a groove on the equatorial plane, it refers to the thickness from the intersection of the straight line connecting the radially outermost endpoints of the groove and the tire equatorial plane to the interface with the innermost base rubber layer of the tread portion in the radial direction of the tire. The "thickness of the base rubber layer" refers to the thickness from the interface with the cap rubber layer to the innermost interface in the tire radial direction of the tread portion.

The thickness of the cap rubber layer and the thickness of the base rubber layer can be calculated by totaling the thickness of the cap rubber layer and the thickness of the base rubber layer in the thickness of the tread portion, as described-above. When a groove exists on the tire equatorial plane, it can be obtained by calculating the thickness of the cap rubber layer and the thickness of the base rubber layer at the center of the land portion of the tread portion closest to the equatorial plane.

In the present invention, the term "groove" refers to a groove having an opening width of 3 mm or more on the outermost surface of the tread portion and a depth of 3 mm or more.

In this case, considering steering stability, the 30°C tan $\delta$ of the base rubber layer is preferably smaller than the 30°C tan $\delta$ of the cap rubber layer.

Incidentally, the 30°C tan $\delta$ of the base rubber layer can be appropriately adjusted by compounding materials in the same manner as the cap rubber layer described above.

7. Acetone extractables of cap rubber layer (AE)

In the present invention, the acetone extractable content (AE) of the cap rubber layer is preferably 2.7 % by mass or more, more preferably 5% by mass or more, further preferably 6.7 % by mass or more, further preferably 8 % by mass or more, further preferably 10.2 % by mass or more, further preferably 10.4 % by mass or more, further preferably 10.5 % by mass or more, further preferably 10.6 % by mass or more, further preferably 10.7 % by mass or more, further preferably 11 % by mass % or more, and further preferably 11.9 % by mass or more. On the other hand, although the upper limit is not particularly limited, it is preferably 17% by mass or less, more preferably 15% by mass or less, and further preferably 13% by mass or less.

The acetone extractables (AE) can be considered as an index indicating the amount of softening agents and the like in the rubber composition, and can also be considered as an index indicating the softness of the rubber composition. For this reason, by controlling the AE amount in the cap rubber layer as described above, the cap rubber layer is appropriately deformed and can be more flexibly grounded on the icy road surface. As a result, it is possible to further suppress the deterioration of the braking performance of the tires on the icy road surface.

Note that the acetone extractables (AE) can be measured in accordance with JIS K 6229:2015. Specifically, AE (% by mass) can be obtained by immersing a vulcanized rubber test piece cut out from the measurement site in acetone for a predetermined time and determining the mass reduction rate (%) of the test piece.

More specifically, each vulcanized rubber test piece is immersed in acetone at room temperature and normal pressure for 72 hours to extract soluble components; the mass of each test piece before and after extraction is measured; and the acetone-extractable content can be calculated by the following formula.

$$\text{Acetone-extractable content (\%)} = \{(\text{mass of rubber test piece before extraction} - \text{mass of rubber test piece after extraction}) / (\text{mass of rubber test piece before extraction})\} \times 100$$

Moreover, the above-mentioned acetone-extractable content can be appropriately changed by changing the compounding ratio of the plasticizer in the rubber composition.

8. Land ratio

In the tire according to the present invention, the land ratio in the tread portion of the tire installed on a standardized rim and having a standardized internal pressure is preferably 55% or more, and more preferably 60% or more.

"Land ratio" is the ratio of the actual contact area to the virtual contact area in which all the grooves on the surface of the tread are filled. It is considered that, when the land ratio is large, since the contact area with the road surface becomes large, a sufficient grip performance can be obtained stably and a higher braking performance can be obtained.

Although the upper limit of the land ratio is not particularly limited, it is preferably 85% or less, more preferably 80% or less, and further preferably 75% or less.

In the present invention, the product of the above-described land ratio (%) and the content (parts by mass) of SBR having a styrene content of 25% by mass or less in 100 parts by mass of the rubber component is preferably 5200 or less. It is more preferably 4400 or less, further preferably 3900 or less, further preferably 3250 or less, and further preferably 2600 or less. As a result, the effects of the network of styrene domains work together to obtain a higher braking performance. Although the lower limit is not particularly limited, for example, it is 2100 or more.

The above land ratio can be obtained from the ground contact shape under standardized rim, standardized internal pressure, and standardized load conditions.

Specifically, the tire is installed on a standardized rim, a standardized internal pressure is applied, and the tire is allowed to stand at 25°C for 24 hours). Thereafter, an ink is printed on the tire tread surface, a standardized load is applied and then the tire tread surface is pressed against a thick paper (camber angle is 0°) to transfer the ink to the paper. Thus, the contact shape can be obtained. The transfer is made at five locations by rotating the tire by 72°in the circumferential direction. That is, the ground contact shape is obtained five times. At this time, for each of the five ground contact shapes, the discontinuous portions with the outline grooves are smoothly connected, and the resulting shape is defined as a virtual contact surface.

Then, the land ratio can be obtained from (average area of the five ground contact shapes (black portions) transferred to the thick paper / average of the areas of virtual contact surfaces obtained from the five ground contact shapes) × 100 (%).

Note that, the "standardized internal pressure" is the air pressure specified for each tire by the above-mentioned standards, and is the maximum air pressure for JATMA, "INFLATION PRESSURE" for ETRTO, and the maximum value described in the table "TIRE LOAD LIMITS AT VARIOUS COLD INFLATION PRESSURES" for TRA. As in the case of "standardized rim", refer to JATMA, ETRTO, and TRA in that order, and their standards are followed. And, in the case of a tire that is not defined in the standard, it is the standardized internal pressure (however, 250 kPa or more) of another tire size (specified in the standard) for which the standardized rim is described as the standard rim. When a plurality of standardized internal pressures of 250 kPa or more are listed, the minimum value among them is referred.

The "standardized load" is the load defined for each tire by the standards in the standard system including the standard on which the tire is base and refers to the maximum mass that can be loaded on the tire, and is the maximum load capacity for JATMA, "LOAD CAPACITY" for ETRTO, and the maximum value described in "TIRE LOAD LIMITS AT VA RIOUS COLD INFLATION PRESSURES" for TRA. As in the case of "standardized internal pressure", JATMA, ETRTO, and TRA are referred to in that order, and their standards are followed. Then, in the case of a tire not specified in the standard, the standardized load WL is obtained by the following calculation.

$$V=\{(Dt/2)^2-(Dt/2-Ht)^2\}\times\pi\times Wt$$

$$W_L=0.000011\times V+175$$

$W_L$: standardized load (kg)
V: virtual volume of tire (mm3)
Dt: tire outer diameter Dt (mm)
Ht: tire section height (mm)
Wt: cross-sectional width of tire (mm)

9. Aspect ratio

The aspect ratio indicates the ratio of the cross-sectional height to the tire cross-sectional width. It is considered that, the smaller this ratio, a large ground contact area is secured and a high braking performance can be obtained. In the present invention, the specific aspect ratio is preferably 30% or more and 60% or less.

In addition, the product of the content (parts by mass) of the filler with respect to 100 parts by mass of the rubber component and the aspect ratio (%) is preferably 9100 or less, more preferably 4675 or less, further preferably 4125 or less, and further preferably 3080 or less. As a result, the effects of the network of the filler work together to further improve the braking performance. Although the lower limit is not particularly limited, for example, it is 2500 or more.

Note that the above aspect ratio (%) can be obtained by the following formula based on the cross-sectional height Ht (mm), the cross-sectional width Wt (mm), the tire outer diameter Dt (mm), and the rim diameter R (mm) when the internal pressure is 250 kPa.

$$\text{Aspect ratio (\%)} = (Ht / Wt) \times 100\ (\%)$$

$$Ht = (Dt - R) / 2$$

[3] Embodiment

The present invention will be specifically described below based on embodiments.

1. Rubber composition forming cap layer

In the tire according to the present invention, the rubber composition forming the cap rubber layer can be obtained by adjusting appropriately the type and amount of various compounding materials such as rubber components, fillers, plasticizers, vulcanizing agents, and vulcanization accelerators described below.

(1) Compounding material

(a) Rubber component

The rubber component is not particularly limited, and rubbers (polymers) commonly used in the manufacture of tires can be used. Examples of the rubbers include diene rubbers such as isoprene based rubber, butadiene rubber (BR), styrene butadiene rubber (SBR), and nitrile rubber (NBR); butyl based rubber such as butyl rubber; and thermoplastic elastomers such as styrene butadiene styrene block copolymer(SBS) and styrene-butadiene block copolymer (SB).

In the present invention, among these, styrene-butadiene rubber (SBR) is contained in order to contain styrene in the rubber component. A styrene-based polymer such as styrene-butadiene-styrene block copolymer (SBS), styrene-butadiene block copolymer (SB), and the like may be contained, other than SBR. These styrene-based polymers may be used in combination with other rubber components, and for example, combination of SBR and BR, and combination of SBR, BR and isoprene-based rubber are preferable.

In addition, rubbers (polymers) commonly used in the manufacture of tires such as diene rubbers such as isoprene-based rubbers, butadiene rubbers (BR) and nitrile rubbers (NBR) and butyl-based rubbers such as butyl rubbers, may be used in combination with the above styrene-based rubbers, and for example, combination of SBR and BR, and combination of SBR, BR and isoprene rubber are preferable. As the rubber components, extended rubbers that have been previously extended with a plasticizer component such as oil, resin or liquid rubber, which will be described later.

(a-1) SBR

The weight average molecular weight of SBR is, for example, more than 100,000 and less than 2,000,000. Further, in the present invention, the amount of styrene in the SBR component having the amount of styrene of 25% by mass or less is more preferably 20% by mass or less, and further preferably 15% by mass or less. On the other hand, as the lower limit, it is preferably 3% by mass or more, more preferably 5% by mass or more, and further preferably 8% by mass or more.

The vinyl content (1,2-bonded butadiene content) of SBR is, for example, more than 5% by mass and less than 70% by mass. The vinyl content of SBR refers to the content of 1,2-bonded butadiene with respect to the entire butadiene portion in the SBR component. Further, structural identification of SBR (measurement of styrene content and vinyl content) can be performed using, for example, JNM-ECA series equipment manufactured by JEOL Ltd.

In the present invention, the content of SBR having a styrene content of 25% by mass or less in 100 parts by mass of the rubber component is 40 parts by mass or more and 80 parts by mass or less, as described above, but it is more preferably 50 parts by mass or more and 70 parts by mass or less, further preferably 55 parts by mass or more and 65 parts by mass or less, and particularly preferably 60 parts by mass.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. In addition, hydrogenated SBR obtained by hydrogenating the butadiene portion of SBR may be used. Hydrogenated SBR may be obtained by subsequently hydrogenating the BR portion of SBR. Styrene, ethylene and butadiene may be copolymerized to give similar structures.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),

main chain modified SBR having the functional group in the main chain,

main chain terminal modified SBR having the functional group at the main chain and the terminal (for example, a main chain end modified SBR having the above functional group to the main chain and having at least one end modified with the above modifying agent), and

end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

As modified SBR, for example, SBR modified with a compound (modifying agent) represented by the following formula can be used.

[Chemical 1]

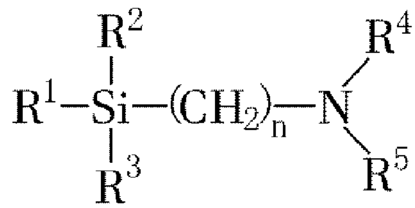

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.

As the modified SBR modified by the compound (modifying agent) represented by the above formula, SBR, in which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;

polyglycidyl ethers of aromatic compounds having two or more phenol groups such as diglycidylated bisphenol A;

polyepoxy compounds such as 1,4-diglycidylbenzene, 1,3,5-triglycidylbenzene, and polyepoxidized liquid polybutadiene;

epoxy group-containing tertiary amines such as 4,4' -diglycidyl-diphenylmethylamine, and 4,4'-diglycidyl-dibenzylmethylamine;

diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p -phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;

epoxy group-containing silane compounds such as 1,3-bis-(glycidyloxypropyl) -tetramethyldisiloxane, and (3-glycidyloxypropyl) - pentamethyldisiloxane;

sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl]

sulfide, (trimethylsilyl) [3-(methyldipropoxysilyl) propyl] sulfide, and (trimethylsilyl) [3-(methyldibutoxysilyl) propyl] sulfide;

N-substituted aziridine compound such as ethyleneimine and propyleneimine;

alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;

(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;

benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;

N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;

N- substituted piperidone such as methyl-2-piperidone, N-vinyl-2-piperidone, and N-phenyl-2-piperidone;

N-substituted lactams such as

N-methyl -ε-caprolactam, N-phenyl-ε-caprolactum, N-methyl-ω-laurilolactum, N-vinyl-ω-laurilolactum, N-methyl-β-propiolactam, and N-phenyl-6-propiolactam; and

N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Material Co., Ltd., Asahi Kasei Co., Ltd., Zeon Co., Ltd., etc. can be used. The SBR may be used alone or in combination of two or more.

(a-2) BR

In the present invention, the rubber composition may optionally contain BR. In this case, the content of BR in 100 parts by mass of the rubber component is preferably 20 parts by mass or more and 40 parts by mass or less, and more preferably 25 parts by mass or more and 35 parts by mass or less.

The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans content of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Industries, Ltd., ENEOS Materials Co., Ltd., Asahi Kasei Co., Ltd., and Nippon Zeon Co., Ltd., etc. can be used.

(a-3) Isoprene rubber

In the present invention, the rubber composition may optionally contain isoprene rubber. In this case, the content of the isoprene-based rubber in 100 parts by mass of the rubber component is preferably 10 parts by mass or more and 30 parts by mass or less, and more preferably 15 parts by mass or more and 25 parts by mass or less.

Examples of the isoprene rubber include natural rubber (NR), isoprene rubber (IR), reformed NR, modified NR, and modified IR.

As the NR, for example, SIR20, RSS # 3, TSR20, and SVR-L, which are commonly used in the tire industry, can be used. The IR is not particularly limited, and for example, IR 2200 or the like, which is commonly used in the tire industry, can be used. Reformed NR includes deproteinized natural rubber (DPNR), high-purity natural rubber (UPNR), etc., and modified NR includes epoxidized natural rubber (ENR), hydrogenated natural rubber (HNR), grafted natural rubber, etc. Examples of the modified IR include epoxidized isoprene rubber, hydrogenated isoprene rubber, and grafted isoprene rubber. These may be used alone or in combination of two or more.

(a-4) Other rubber components

Further, as other rubber components, rubbers (polymers) generally used for manufacturing tires, such as nitrile rubber (NBR), may be contained.

(b) Compounding materials other than rubber components

(b-1) Filler

In the present invention, as described above, the rubber composition contains silica and carbon black as fillers so that (content of silica / content of carbon black) is 1 or more, and may further contain other fillers. Examples of specific fillers other than silica include graphite, calcium carbonate, talc, alumina, clay, aluminum hydroxide, mica, and biochar (BIO CHAR).

(i-1) Silica

In the present invention, the BET specific surface area of silica contained in the rubber composition s preferably more than 140 $m^2$/g, more preferably more than 160 $m^2$/g, and further preferably more than 180$m^2$/g (fine particle silica) from the viewpoint of obtaining good durability performance. On the other hand, it is preferably less than 300 $m^2$/g from the viewpoint of obtaining good rolling resistance during high-speed running. The BET specific surface area is the value of $N_2$SA measured by the BET method according to ASTM D3037-93.

In the present invention, the content of silica is preferably 40 parts by mass or more, more preferably 50 parts by mass or more, and further preferably 60 parts by mass or more with respect to 100 parts by mass of the rubber component. On the other hand, it is preferably 90 parts by mass or less, more preferably 80 parts by mass or less, and further preferably 70 parts by mass or less.

Examples of silica include dry silica (anhydrous silica) and wet silica (hydrous silica). Among them, wet silica is preferable because it has a large number of silanol groups. Silica made from water-containing glass or the like, or silica made from biomass materials such as rice husks may also be used.

As the silica, products of Evonik Industries, Rhodia Co., Ltd., Tosoh Silica Co., Ltd., Solvay Japan Co., Ltd., and Tokuyama Co., Ltd., etc. can be used.

(i-2) Silane coupling agent

The rubber composition forming the cap rubber layer of the present invention preferably contains a silane coupling agent together with silica.

The silane coupling agent is not particularly limited, and examples thereof include

sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2 -triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as yglycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

As the silane coupling agent, for example, products of Evonik Industries, Momentive Co., Ltd., Shin-Etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 25 parts by mass with respect to 100 parts by mass of silica.

(ii) Carbon black

In the present invention, the rubber composition preferably contains carbon black from the viewpoint of reinforcing properties.
Specific content of the carbon black with respect to 100 parts by mass of the rubber component is preferably equal to or less than that of silica and 20 parts by mass or more, more preferably 30 parts by mass or more, and further preferably 40 parts by mass or more. On the other hand, it is preferably 70 parts by mass or less, more preferably 60 parts by mass or less, and further preferably 50 parts by mass or less.
Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; channel blacks (channel carbon blacks) such as EPC, MPC and CC. These may be used individually by 1 type, and may use 2 or more types together.
The CTAB (Cetyl Tri-methyl Ammonium Bromide) specific surface area of carbon black is preferably 130 $m^2/g$ or more, more preferably 160 $m^2/g$ or more, and further preferably 170 $m^2/g$ or more. On the other hand, it is preferably 250 $m^2/g$ or less, and more preferably 200 $m^2/g$ or less. The CTAB specific surface area is a value measured according to ASTM D3765-92.
Specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(iii) Other fillers

The rubber composition may optionally contain fillers such as graphite, calcium carbonate, talc, alumina, clay, aluminum hydroxide, and mica, which are generally used in the tire industry, in addition to the above-mentioned silica and carbon black, as necessary. These contents are, for example, more than 0.1 part by mass and less than 200 parts by mass with respect to 100 parts by mass of the rubber component.

(b-2) plasticizer component

The rubber composition may contain oil, liquid rubber, and resin as plasticizer components as components for softening rubber. The plasticizer component is a component that can be extracted from the vulcanized rubber with acetone. The total content of the plasticizer component is preferably 10 parts by mass or more, more preferably 15 parts by mass or more, and further preferably 20 parts by mass or more, with respect to 100 parts by mass of the rubber component. On the other hand, it is preferably 40 parts by mass or less, more preferably 35 parts by mass or less, and further preferably 30 parts by mass or less. Note that, when the above-mentioned extensible rubber component is included, the extensible component contained therein is included in these plasticizer components.

(i) Oil

Examples of the oil include mineral oils (commonly referred to as process oils), vegetable oils, or mixtures thereof. As the mineral oil (process oil), for example, a paraffinic process oil such as for example, MES (Mild Extract Solvated), DAE (Distillate Aromatic Extract), TDAE (Treated Distillate Aromatic Extract), TRAE (Treated Residual Aromatic Extract), and RAE (Residual Aromatic Extract), an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more. Moreover, from the viewpoint of life cycle assessment, waste oil after being used as a lubricating oil for mixers for rubber mixing, automobile engines, etc., waste cooking oil, and the like may be used as appropriate.
Specific examples of process oil (mineral oil) include products of Idemitsu Kosan Co., Ltd., Sankyo Yuka Kogyo Co., Ltd., ENEOS Corporation, Olisoy Co., Ltd., H&R Co., Ltd., Toyokuni Seiyu Co., Ltd., Showa Shell Sekiyu Co., Ltd., and Fuji Kosan Co., Ltd.

(ii) Liquid rubber

The liquid rubber mentioned as the plasticizer is a polymer in a liquid state at room temperature (25°C) and is a polymer having a monomer similar to that of solid rubber as a constituent element. Examples of the liquid rubber

include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than 1.0 × 103 and less than 2.0 × 105. In the present specification, Mw of the liquid diene polymer is a polystyrene conversion value measured by gel permeation chromatography

(GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd. and Clay Valley Co., Ltd. can be used.

(iii) Resin component

The resin component also functions as a tackifying component and may be solid or liquid at room temperature. Examples of the specific resin components include hydro-carbon resins such as rosin-based resin, styrene-based resin, coumarone-based resin, terpene-based resin, C5 resin, C9 resin, C5C9 resin, and acrylic resins. Two or more of them may be used in combination. Content of the resin component is more than 2 parts by mass, preferably less than 45 parts by mass, and more preferably less than 30 parts by mass with respect to 100 parts by mass of the rubber component. These resin components may optionally be provided with modified groups capable of reacting with silica.

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include tall rosin (also known as tall oil rosin), gum rosin, wood rosin, disproportionated rosin, polymerized rosin, hydrogenated rosin, and other chemically modified rosins. The modified rosin is a modified compound of a unmodified rosin, and examples thereof include rosin esters, unsaturated carboxylic acid-modified rosins, unsaturated carboxylic acid-modified rosin esters, rosin amide compounds, and rosin amine salts.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids such as maleic anhydride and acid anhydrides thereof.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 part by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30°C and lower than 160°C. The softening point is the temperature at which the ball drops when the softening point defined in JIS K 6220-1: 2001

is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of ($C_5H_8$) n or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene, indene, and methyl indene. As specific examples thereof, for example, a coumaron indene resin, a coumaron resin, an indene resin, and an aromatic vinyl resin are preferably used. As the aromatic vinyl resin, a homopolymer of α -methylstyrene or styrene or a copolymer of α -methylstyrene and styrene is preferable because it is economical, easy to process, and excellent in heat generation. A copolymer of α -methylstyrene and styrene is more preferred. As the aromatic vinyl-based resin, for example, those commercially available from Kraton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

The acrylic resin is not particularly limited, but for example, a solvent-free acrylic resin can be used.

As the solvent-free acrylic resin, a (meth) acrylic resin (polymer), synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 pages 42-45, and the like) without using polymerization initiators, chain transfer agents, organic solvents, etc. as auxiliary raw materials as much as possible, can be mentioned. In the present invention, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Co., Ltd., Arakawa Chemical Industry Co., Ltd., Taoka Chemical Industry Co., Ltd. can be used.

(b-3) Stearic acid

In the present invention, the rubber composition preferably contains stearic acid. Content of stearic acid is, for

example, more than 0.5 parts by mass and less than 10.0 parts by mass with respect to 100 parts by mass of the rubber component. As the stearic acid, conventionally known ones can be used, and, for example, products of NOF Corporation, Kao Corporation, Fuji film Wako Pure Chemical Industries, Ltd., and Chiba Fatty Acid Co., Ltd., etc. can be used.

(b-4) Anti-aging agent

In the present invention, the rubber composition preferably contains an antioxidant. The content of the anti-aging agent is, for example, more than 0.5 parts by mass and less than 10 parts by mass, and more preferably 1 part by mass or more with respect to 100 parts by mass of the rubber component.
Examples of the antiaging agent include naphthylamine-based antiaging agents such as phenyl-$\alpha$-naphthylamine; diphenylamine-based antiaging agents such as octylated diphenylamine and 4,4'-bis ($\alpha$, $\alpha$'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3- (3',5'-di-t-butyl-4'-hydroxyphenyl)propionate] methane. These may be used alone or in combination of two or more.
As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. Content of the wax is, for example, 0.5 to 20 parts by mass, preferably 1.0 to 15 parts by mass, and more preferably 1.5 to 10 parts by mass with respect to 100 parts by mass of the rubber component.
The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.
As the wax, for example, products of Ouchi Shinko Chemical Industry Co., Ltd., Nippon Seiro Co., Ltd., Seiko Chemical Co., Ltd., etc. can be used.

(b-6) Zinc oxide

The rubber composition may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Dispersant

The rubber composition may contain a dispersant, as described above. The content of the dispersant is preferably more than 0.5 parts by mass and less than 10 parts by mass, and more preferably 1 part by mass or more and 5 parts by mass or less with respect to 100 parts by mass of the rubber component.
A specific dispersant is not particularly limited as long as it can improve the dispersibility of silica, and examples thereof include the above-described silane coupling agents and polyalkylene glycol. These may be used alone or in combination of two or more. Among them, polyalkylene glycol is preferred.
As polyalkylene glycol, an AO having 2-4 carbon atoms (ethylene oxide, 1,2-propylene oxide, 1,3- propylene oxide, and the like) adduct to an alkylene glycol having 2-4 carbon atoms (ethylene glycol, propylene glycol, butylene glycol, and the like) can be mentioned. These may be used alone or in combination of two or more.
The addition (polymerization) of AO may be either homopolymerization or copolymerization. In the case of copolymerization, any of block copolymerization, random copolymerization, combined use of block and random, and the like may be used. Although the degree of polymerization of AO is not particularly limited, it is preferably 1 or more, and more preferably 2 or more. It is preferably 100 or less, more preferably 50 or less, and further preferably 20 or less.
As the polyalkylene glycol, polypropylene glycol and polyethylene glycol are preferable, and polyethylene glycol is more preferred.
The weight average molecular weight (Mw) of the polyalkylene glycol is preferably 1000 or more, more preferably 5000 or more, and further preferably 10,000 or more. And, it is preferably 50,000 or less, more preferably 40,000 or less, and further preferably 30,000 or less.
The weight average molecular weight (Mw) can be obtained by standard polystyrene conversion based on the

measured value by gel permeation chromatography (GPC) (GPC-8000 series manufactured by Tosoh Corporation, detector: differential refractometer, column: TSKGEL SUPERMULTIPORE HZ-M manufactured by Tosoh Corporation).

(b-8) Processing aid

The rubber composition may also contain processing aids. As the processing aids, for example, fatty acid metal salts, fatty acid amides, amide esters, silica surfactants, fatty acid esters, mixtures of fatty acid metal salts and amide esters, mixtures of fatty acid metal salts and fatty acid amides, and the like can be used. For example, products of Rhein Chemie Co., Ltd., Structol Co., Ltd., etc. can be used. These may be used alone or in combination of two or more. Among them, fatty acid metal salts are preferred.

Fatty acids constituting fatty acid metal salts include saturated or unsaturated fatty acids (preferably saturated or unsaturated fatty acids having 6 to 28 carbon atoms (more preferably having 10 to 25 carbon atoms, further preferably having 14 to 20 carbon atoms)). Examples thereof include lauric acid, myristic acid, palmitic acid, stearic acid, oleic acid, linoleic acid, linolenic acid, arachidic acid, behenic acid, and nervonic acid. These can be used singly or in combination of two or more. Among them, saturated fatty acids are preferred, and saturated fatty acids having 14 to 20 carbon atoms are more preferred.

Examples of metals constituting the fatty acid metal salt include alkali metals such as potassium and sodium, alkaline earth metals such as magnesium, calcium and barium, zinc, nickel, and molybdenum. These may be used alone or in combination of two or more. Among them, zinc is preferable.

Content of the processing aid is preferably 0.5 parts by mass or more, more preferably 1.5 parts by mass or more, and furter preferably 2 parts by mass or more with respect to 100 parts by mass of the rubber component. On the other hand, it is preferably 8 parts by mass or less, more preferably 6 parts by mass or less, and further preferably 4 parts by mass or less.

(b-9) Cross-linking agent and vulcanization accelerator

The rubber composition preferably contains a cross-linking agent such as sulfur. Content of the cross-linking agent is, for example, more than 0.1 parts by mass and less than 10.0 parts by mass with respect to 100 parts by mass of the rubber component.

Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.

As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.

Examples of the cross-linking agent other than sulfur include vulcanizing agents containing a sulfur atom such as Tackirol V200 manufactured by Taoka Chemical Industry Co., Ltd., and KA9188 (1,6-bis (N, N'-dibenzylthiocarbamoyldithio) hexane) manufactured by Lanxess; and organic peroxides such as dicumyl peroxide.

The rubber composition preferably contains a vulcanization accelerator. The content of the vulcanization accelerator is, for example, more than 0.3 parts by mass and less than 10.0 parts by mass with respect to 100 parts by mass of the rubber component.

Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-10) Others

In addition to the above components, the rubber composition may contain additives commonly used in the tire industry, such as fatty acid metal salts, carboxylic acid metal salts, organic peroxides, anti-reversion agents may be further contained, if desired. Content of these additives is, for example, more than 0.1 parts by mass and less than 200

parts by mass with respect to 100 parts by mass of the rubber component.

(2) Production of rubber composition

The rubber composition forming the cap rubber layer is prepared by appropriately adjusting the various compounding materials described above and performing a general method, for example, a manufacturing method having a base kneading step of kneading a rubber component and a filler such as carbon black, and a finish kneading step of kneading the kneaded product obtained in the base kneading step and a cross-linking agent.

Kneading can be performed using, for example, a known (closed type) kneader such as a Banbury mixer, kneader, and open roll.

The kneading temperature in the base kneading step is, for example, higher than 50°C and lower than 200°C, and the kneading time is, for example, more than 30 seconds and less than 30 minutes. In the base kneading step, in addition to the above components, compounding agents conventionally used in the rubber industry, such as softeners such as oils, zinc oxide, anti-aging agents, waxes, and vulcanization accelerators, may be appropriately added and kneaded as desired.

In the finish kneading step, the kneaded material obtained in the base kneading step and a cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide, and the like may be appropriately added and kneaded as desired.

2. Manufacture of tires

The tire according to the present invention can be produced as an unvulcanized tire by forming a tread rubber having a predetermined shape using the rubber composition obtained above as a cap rubber layer, and then forming the tire together with other tire members by an ordinary method on a tire molding machine.

When the tread portion is to have a multi-layered structure with the base rubber layer, a rubber composition forming a base rubber layer can be obtained, basically, by using the above-described rubber component and compounding materials, appropriately changing the compounding amount, and kneading in the same manner. Then, it is extruded together with the cap rubber layer and molded into a tread rubber of a predetermined shape, and then molded together with other tire members on a tire molding machine by a normal method to produce an unvulcanized tire.

Specifically, on the molding drum, the inner liner as a member to ensure the airtightness of the tire, the carcass as a member to withstand the load, impact, and filling air pressure received by the tire, a belt member as a member to strongly tighten the carcass to increase the rigidity of the tread, and the like are wound, both ends of the carcass are fixed to both side edges, a bead portion as a member for fixing the tire to the rim is arranged, and formed into a toroid shape. Then the tread is pasted on the center of the outer circumference, and the sidewall is pasted on the radial outer side to form the side portion. Thus, an unvulcanized tire is produced.

Then, the produced unvulcanized tire is heated and pressed in a vulcanizer to obtain a tire. The vulcanization step can be carried out by applying a known vulcanization means. The vulcanization temperature is, for example, higher than 120°C and lower than 200°C, and the vulcanization time is, for example, more than 5 minutes or and less than 15 minutes.

As described above, in the obtained tire, the effect of scratching the icy road surface and suppressing heat accumulation in the tread portion by containing an appropriate amount of SBR having a low styrene content, the effect of suppressing heat accumulation by lowering 30°Ctan $\delta$, the reaction force generation effect due to containing an appropriate amount of carbon black, the follow-up effect and reaction force generation effect due to containing silica more than the content of carbon black, and the heat dissipation effect due to thinning the tread portion cooperate with each other, and it is possible to sufficiently suppress the deterioration of the braking performance of the tires on the icy road surface after repeated running.

The tire according to the present invention is not particularly limited in category, and can be used as a tire for passenger cars, a tire for heavy-duty vehicles such as trucks and buses, a tire for motorcycles, a run-flat tire, a non-pneumatic tire, and the like, but it is preferable to use a tire for a passenger car. Moreover, it is preferable to set it as a pneumatic tire.

[Example]

Examples considered to be preferable when implementing the present invention are shown below, but the scope of the present invention is not limited to these examples. In the examples, a pneumatic tire (tire size: 205/55R16, aspect ratio: 55%, land ratio: 65%) made from a composition obtained by using various chemicals mentioned below and

changing the formulation according to each Table were evaluated. The results calculated based on the following evaluation methods are shown in Tables 2 to 4.

1. Rubber composition forming cap rubber layer

(1) Compounding material

(a) Rubber component

(a-1) SBR-1: Modified S-SBR obtained by the method shown in the next paragraph (styrene content: 25% by mass, vinyl content: 25% by mass)
(a-2) SBR-2: HPR850 (modified S-SBR) manufactured by ENEOS Materials Co., Ltd. (styrene content: 27.5% by mass, vinyl content: 59.0% by mass)
(a-3) SBR-3: HPR840 (S-SBR) manufactured by ENEOS Materials Co., Ltd. (styrene content: 10% by mass, vinyl content: 42% by mass)
(a-4) NR: TSR20
(a-5) BR: Ubepol BR150B (Hi-cis BR) manufactured by Ube Industries, Ltd. (cis content 97% by mass, trans content 2% by mass, vinyl content 1% by mass)

(Manufacture of SBR-1)

The above SBR-1 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95°C. The polymer solution is continuously withdrawn from the top of the first reactor and supplied to the second reactor. The temperature of the second reactor is kept at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-1).
The vinyl content (unit: mass%) of the SBR-1 is determined by infrared spectroscopy from the absorption intensity near 910 cm-1, which is the absorption peak of the vinyl group. Also, the styrene content (unit: % by mass) is determined from the refractive index according to JIS K6383: 1995).

(b) Compounding materials other than rubber components

(b-1) Carbon black: Show Black N134 manufactured by Cabot Japan Co., Ltd. (CTAB specific surface area: 135 $m^2$/g)
(b-2) Silica-1: Ultrasil VN3 manufactured by Evonik Industries ($N_2$SA: 175 $m^2$/g, average particle size: 18 nm)
(b-3) Silica-2: Ultrasil 9100Gr manufactured by Evonik Industries ($N_2$SA: 235 $m^2$/g, average particle size: 15 nm(fine particle silica))
(b-4) Silane coupling agent-1: Si266 manufactured by Evonik Industries (bis (3-triethoxysilylpropyl) disulfide)
(b-5) Silane coupling agent-2: NXT manufactured by Momentive (3-octanoylthiopropyltriethoxysilane)
(b-6) Resin: Petrotac 90 (C5/C9 copolymer petroleum resin) manufactured by Tosoh Corporation
(b-7) Dispersant: polyethylene glycol manufactured by Sanyo Kasei Co., Ltd. (Weight average molecular weight (Mw): 10,000)
(b-8) Oil: Diana Process AH-24 (aroma oil) manufactured by Idemitsu Kosan Co., Ltd.
(b-9) Wax: Sannok N manufactured by Ouchi Shinko Chemical Industry Co., Ltd.
(b-10) Anti-aging agent-1: Antigen 6C manufactured by Sumitomo Chemical Co., Ltd. (N-(1,3-dimethylbutyl)-N'-phenyl-p-phenylenediamine)
(b-11) Anti-aging agent-2: Antigen RD manufactured by Sumitomo Chemical Co., Ltd. (Polymer of 2,2,4-trimethyl-1,2-dihydroquinoline)

(b-12) Stearic acid: bead stearic acid "Tsubaki" manufactured by NOF Corporation
(b-13) Zinc oxide: Two types of zinc oxide manufactured by Mitsui Mining & Smelting Co., Ltd.
(b-14) Processing aid: EF44 (saturated fatty acid zinc salt) manufactured by Structol Co., Ltd.
(b-15) Sulfur: powdered sulfur (containing 5% oil) manufactured by Tsurumi Chemical Industry Co., Ltd.
(b-16) Vulcanization accelerator-1: Nocceler CZ manufactured by Ouchi Shinko Kagaku Kogyo Co., Ltd. (N-cyclohexyl-2-benzothiazylsulfenamide (CBS))
(b-17) Vulcanization accelerator-2: Soxinol D (DPG) manufactured by Sumitomo Chemical Co., Ltd. (N,N'-diphenylguanidine)

(2) Rubber composition forming cap rubber layer

Using a Banbury mixer, materials other than sulfur and a vulcanization accelerator are kneaded at 150°C for 5 minutes according to the formulations shown in Tables 2 to 4 to obtain a kneaded product. Note that, each compounding quantity is a mass part.
Next, sulfur and a vulcanization accelerator are added to the kneaded product, and kneaded at 80°C for 5 minutes using an open roll to obtain a rubber composition forming a cap rubber layer.

2. Manufacture of rubber composition forming base rubber layer

In parallel, a rubber composition for forming the base rubber layer is obtained based on the formulation shown in Table 1 in the same manner as the rubber composition for forming the cap rubber layer.

[Table 1]

| Compounding material | Compounding amount (parts by mass) |
|---|---|
| NR (TSR20) | 70 |
| BR (UBEPOL-BR150B manufactured by Ube Industries, Ltd.) | 30 |
| Carbon black (Show Black N330T manufactured by Cabot Japan Co., Ltd.) | 35 |
| Stearic acid ("Tsubaki" stearic acid manufactured by NOF Corporation) | 2 |
| Zinc oxide (Zinc white No.1 manufactured by Mitsui Mining & Smelting Co., Ltd.) | 4 |
| Wax (Sannok wax manufactured by Ouchi Shinko Chemical Co., Ltd.) | 2 |
| Antiaging agent (Nocrac 6C manufactured by Ouchi Shinko Chemical Industry Co., Ltd) | 3 |
| Antiaging agent (Antage RD manufactured by Kawaguchi Chemical Industry Co., Ltd.) | 1 |
| Sulfur (powder sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Manufacture of pneumatic tires

Each rubber composition obtained is extruded into a predetermined shape so that the ratio (thickness of cap rubber layer / thickness of base rubber layer) is 6/4, and a tread portion having thickness shown in Tables 2 to 4 is formed.
After that, it is pasted together with other tire members to form an unvulcanized tire, and press-vulcanized for 10 minutes at 170°C to produce each pneumatic tire (test tire) of Examples 1 to 12 and Comparative Examples 1 to 7 shown in Tables 2 to 4.

4. Calculation of parameters

The following parameters are then determined for each test tire.

(1) Loss tangent (tan δ)

From the cap rubber layer of the tread portion of each test tire, a rubber test piece for viscoelasticity measurement is prepared by cutting a piece of length 20 mm × width 4 mm × thickness 2 mm so that the tire circumferential direction is the long side. For the rubber test piece, tan δ is measured using Eplexor series manufactured by GABO under the conditions of frequency of 10Hz, initial strain of 5%, dynamic strain of 1%, and deformation mode: tensile at a temperature of 0°C and 30°C to obtain 0°Ctan δ and 30°Ctan δ. The 30°Ctan δ of the base rubber layer is 0.07.

(2) Tg

Regarding a rubber test piece for viscoelasticity measurement prepared by cutting out from the cap rubber layer in the same manner, tan δ is measured using "Eplexor (registered trademark)" series manufactured by GABO under the conditions of frequency of 10 Hz, initial strain of 2%, amplitude of ±1%, and a heating rate of 2°C/min, with changing the temperature from -60°C to 40°C, and the temperature corresponding to the largest tan δ value in the obtained temperature distribution curve is determined as Tg (°C).

(3) AE

Using a vulcanized rubber test piece prepared by cutting out from the cap rubber layer of the tread portion of each test tire, AE (% by mass) is determined according to JIS K 6229:2015.

(4) Amount of silica / amount of carbon black

The amount of silica / the amount of carbon black (silica/CB) in each test tire is determined.

(5) Other parameters

Then, based on the specifications of each test tire and the content of the compounding, the product of the land ratio (%) and the SBR content (parts by mass) having a styrene content of 25% by mass or less in the rubber component ([land ratio] × [SBR content]) is determined, and the product of the aspect ratio (%) and the filler content (parts by mass) with respect to 100 parts by mass of the rubber component ([aspect ratio] × [filler amount]) is determined.

5. Performance evaluation (braking performance of tires on icy road surface after repeated driving)

Each test tire is buffed, then installed on all wheels of a test vehicle (displacement 2000 cc, front-wheel drive vehicle) and inflated to an internal pressure of 250 kPa. Thereafter, this test vehicle is run for 12,000 km and the tire is used as a test tire after repeated running. Next, after moving the test vehicle onto the test course on an icy surface, when the speed reaches 30 km/h, the lock brake is stepped on and the stopping distance required until the vehicle stopped is measured.

Next, assuming the result in Comparative Example 1 to be 100, the measured result is indexed based on the following formula, and the braking performance of the tire on an icy road surface after repeated running is evaluated. The larger the value, the better the braking performance of the tire on an icy road surface after repeated running.

$$\text{Braking performance of tires on icy roads after repeated running} = [(\text{result of Comparative Example 1}) / (\text{result of test tire})] \times 100$$

[Table 2]

| | EXAMPLE | | | | | | |
|---|---|---|---|---|---|---|---|
| | 1 | 2 | 3 | 4 | 5 | 6 | 7 |
| Formulation of cap rubber layer | | | | | | | |
| SBR-1 | 40 | 60 | 50 | 50 | 60 | 60 | 60 |

(continued)

| | EXAMPLE | | | | | | |
|---|---|---|---|---|---|---|---|
| | 1 | 2 | 3 | 4 | 5 | 6 | 7 |
| Formulation of cap rubber layer | | | | | | | |
| SBR-2 | 20 | - | - | - | - | - | - |
| SBR-3 | 20 | - | - | - | - | - | - |
| NR | - | - | 20 | 20 | - | - | - |
| BR | 20 | 40 | 30 | 30 | 40 | 40 | 40 |
| Carbon black | 25 | 25 | 25 | 16 | 25 | 25 | 25 |
| Silica -1 | 60 | 60 | 60 | 40 | 60 | - | 60 |
| Silica-2 | - | - | - | - | - | 60 | - |
| Coupling agent-1 | 6.0 | 6.0 | 6.0 | 4.0 | - | 6.0 | 6.0 |
| Coupling agent-2 | - | - | - | - | 6.0 | - | - |
| Resin | - | - | - | - | 3 | - | - |
| Dispersant | - | - | - | - | - | - | 2 |
| Oil | 25 | 25 | 15 | 5 | 25 | 25 | 25 |
| Wax | 2 | 2 | 2 | 2 | 2 | 2 | 2 |
| Antiaging agent-1 | 2 | 2 | 2 | 2 | 2 | 2 | 2 |
| Anti-aging agent-2 | 1 | 1 | 1 | 1 | 1 | 1 | 1 |
| Stearic acid | 2 | 2 | 2 | 2 | 2 | 2 | 2 |
| Zinc oxide | 2 | 2 | 2 | 2 | 2 | 2 | 2 |
| Processing aid | 2 | 2 | 2 | 2 | 2 | 2 | 2 |
| Sulfur | 1.5 | 1.5 | 1.5 | 1.5 | 1.5 | 1.5 | 1.5 |
| Vulcanization accelerator-1 | 2.5 | 2.5 | 2.5 | 2.5 | 2.5 | 2.5 | 2.5 |
| Vulcanization accelerator-2 | 2.0 | 2.0 | 2.0 | 2.0 | 2.0 | 2.0 | 2.0 |
| Parameter | | | | | | | |
| Styrene content in all SBR (% by mass) | 21.9 | 25 | 25 | 25 | 25 | 25 | 25 |
| Tread thickness (mm) | 14 | 14 | 14 | 14 | 14 | 14 | 14 |
| Tg (°C) | -28 | -41 | -40 | -40 | -41 | -42 | -44 |
| 30°C tan $\delta$ | 0.22 | 0.22 | 0.24 | 0.14 | 0.19 | 0.22 | 0.20 |
| 0°C tan $\delta$ | 0.36 | 0.26 | 0.27 | 0.23 | 0.24 | 0.30 | 0.29 |
| Silica amount / CB amount | 2.4 | 2.4 | 2.4 | 2.5 | 2.4 | 2.4 | 2.4 |
| AE (% by mass) | 10.7 | 10.7 | 6.7 | 2.7 | 11.9 | 10.7 | 10.6 |
| [Land ratio] x [SBR content] | 2600 | 3900 | 3250 | 3250 | 3900 | 3900 | 3900 |
| [Aspect ratio] x [Amount of filler] | 4675 | 4675 | 4675 | 3080 | 4675 | 4675 | 4675 |
| Performance evaluation | | | | | | | |
| Braking performance on ice | 105 | 110 | 115 | 107 | 112 | 129 | 115 |

[Table 3]

| | EXAMPLE | | | | |
|---|---|---|---|---|---|
| | 8 | 9 | 10 | 11 | 12 |
| Formulation of cap rubber layer | | | | | |
| SBR-1 | 80 | - | 60 | 18 | 70 |
| SBR-2 | - | - | - | - | - |
| SBR-3 | - | 80 | - | 42 | - |
| NR | - | - | - | - | - |
| BR | 20 | 20 | 40 | 40 | 40 |
| Carbon black | 25 | 25 | 35 | 25 | 25 |
| Silica -1 | 60 | 60 | 40 | 60 | 60 |
| Silica-2 | - | - | - | - | - |
| Coupling agent-1 | 6.0 | 6.0 | 4 | 6 | 6 |
| Coupling agent-2 | - | - | - | - | - |
| Resin | - | - | - | - | - |
| Dispersant | - | - | - | - | - |
| Oil | 25 | 25 | 25 | 25 | 25 |
| Wax | 2 | 2 | 2 | 2 | 2 |
| Antiaging agent-1 | 2 | 2 | 2 | 2 | 2 |
| Anti-aging agent-2 | 1 | 1 | 1 | 1 | 1 |
| Stearic acid | 2 | 2 | 2 | 2 | 2 |
| Zinc oxide | 2 | 2 | 2 | 2 | 2 |
| Processing aid | 2 | 2 | 2 | 2 | 2 |
| Sulfur | 1.5 | 1.5 | 1.5 | 1.5 | 1.5 |
| Vulcanization accelerator-1 | 2.5 | 2.5 | 2.5 | 2.5 | 2.5 |
| Vulcanization accelerator-2 | 2.0 | 2.0 | 2 | 2 | 2 |
| Parameter | | | | | |
| Styrene content in all SBR (% by mass) | 25 | 10 | 25 | 14.5 | 25 |
| Tread thickness (mm) | 14 | 14 | 14 | 14 | 14 |
| Tg (°C) | -54 | -60 | -41 | -42 | -43 |
| 30°C tan $\delta$ | 0.19 | 0.19 | 0.20 | 0.21 | 0.21 |
| 0°C tan $\delta$ | 0.21 | 0.22 | 0.25 | 0.23 | 0.26 |
| Silica amount/CB amount | 2.4 | 2.4 | 1.1 | 2.4 | 2.4 |
| AE (% by mass) | 10.7 | 10.7 | 10.4 | 10.2 | 10.5 |
| [Land ratio] x [SBR content] | 5200 | 5200 | 3900 | 3900 | 3900 |
| [Aspect ratio] x [Amount of filler] | 4675 | 4675 | 4125 | 4675 | 4675 |
| Performance evaluation | | | | | |
| Braking performance on ice | 120 | 125 | 103 | 108 | 109 |

[Table 4]

| | COMPARATIVE EXAMPLE | | | | | | |
|---|---|---|---|---|---|---|---|
| | 1 | 2 | 3 | 4 | 5 | 6 | 7 |
| Formulation of cap rubber layer | | | | | | | |
| SBR-1 | 30 | 60 | 40 | 60 | 60 | - | 85 |
| SBR-2 | - | - | - | - | - | 80 | - |
| SBR-3 | - | - | - | - | - | - | - |
| NR | 30 | - | 20 | - | 40 | - | - |
| BR | 40 | 40 | - | 40 | - | 20 | 15 |
| Carbon black | 25 | 25 | 40 | 10 | 40 | 10 | 50 |
| Silica -1 | 75 | 75 | 30 | 50 | 30 | 80 | 40 |
| Silica-2 | - | - | - | - | - | - | - |
| Coupling agent-1 | 7.5 | 7.5 | 3.0 | 5.0 | 3.0 | 8.0 | 4 |
| Coupling agent-2 | - | - | - | - | - | - | - |
| resin | - | - | - | - | - | 10 | - |
| Dispersant | - | - | - | - | - | - | - |
| Oil | 33 | 23 | 18 | 5 | 18 | 10 | 40 |
| Wax | 2 | 2 | 2 | 2 | 2 | 2 | 2 |
| Antiaging agent-1 | 2 | 2 | 2 | 2 | 2 | 2 | 2 |
| Anti-aging agent-2 | 1 | 1 | 1 | 1 | 1 | 1 | 1 |
| Stearic acid | 2 | 2 | 2 | 2 | 2 | 2 | 2 |
| Zinc oxide | 2 | 2 | 2 | 2 | 2 | 2 | 2 |
| Processing aid | 2 | 2 | 2 | 2 | 2 | 2 | 2 |
| Sulfur | 1.4 | 1.4 | 1.4 | 1.4 | 1.4 | 1.2 | 1.5 |
| Vulcanization accelerator-1 | 2.0 | 2.0 | 2.0 | 2.0 | 2.0 | 2.3 | 2.5 |
| Vulcanization accelerator-2 | 2.0 | 2.0 | 2.0 | 2.0 | 2.0 | 2.0 | 1.0 _ |
| Parameter | | | | | | | |
| Styrene content in all SBR (% by mass) | 25 | 25 | 25 | 25 | 25 | 2 7.5 | 25 |
| Tread thickness (mm) | 10 | 10 | 10 | 14 | 22 | 17 | 14 |
| Tg (°C) | -30 | -41 | -38 | -40 | -41 | -13 | -39 |
| 30°C tan $\delta$ | 0.25 | 0.29 | 0.23 | 0.23 | 0.22 | 0.32 | 0.22 |
| 0°C tan $\delta$ | 0.31 | 0.37 | 0.39 | 0.37 | 0.26 | 0.67 | 0.3 |
| Silica amount/ CB amount | 3.0 | 3.0 | 0.8 | 5.0 | 0.8 | 8.0 | 0.8 |
| AE (% by mass) | 12.8 | 9.3 | 10.8 | 2.7 | 8.7 | 8.5 | 11.0 _ |
| [Land ratio] x [SBR content] | 1950 | 3900 | 2600 | 3900 | 3900 | - | 5525 |
| [Aspect ratio] x [Amount of filler] | 5500 | 5500 | 3850 | 3300 | 3850 | 4950 | 4950 |
| Performance evaluation | | | | | | | |
| Braking performance on ice | 100 | 92 | 85 | 98 | 80 | 70 | 90 |

Although the present invention has been described above based on the embodiments, the present invention

is not limited to the above embodiments. Various modifications can be made to the above embodiment within the same and equivalent scope of the present invention.

The present invention (1) is

a tire having a tread portion, wherein
the cap rubber layer forming the tread portion is formed from a rubber composition containing 40 parts by mass or more and 80 parts by mass or less of styrene-butadiene rubber (SBR) having a styrene content of 25% by mass or less in 100 parts by mass of the rubber component, containing silica and carbon black together with the rubber component, and having the loss tangent 30°C tan δ of less than 0.25 measured under the conditions of temperature of 30°C, frequency of 10 Hz, initial strain of 5%, dynamic strain rate of 1%, and deformation mode: tensile;
in the rubber composition, the carbon black content is more than 15 parts by mass with respect to 100 parts by mass of the rubber component, and the ratio of the silica content to the carbon black content is 1 or more;
and the thickness of the tread portion is 15 mm or less.

The present invention (2) is
the tire according to the present invention (1), wherein the styrene-butadiene rubber (SBR) has a styrene content of 20% by mass or less.

The present invention (3) is
the tire according to the present invention (2), wherein the styrene-butadiene rubber (SBR) has a styrene content of 15% by mass or less.

The present invention (4) is
the tire of any combination of the present inventions (1) to (3), wherein the content of the styrene-butadiene rubber (SBR) in 100 parts by mass of the rubber component is 50 parts by mass or more and 70 parts by mass or less.

The present invention (5) is
the tire of any combination of the present inventions (1) to (4), wherein the 30°Ctan δ is 0.20 or less.

The present invention (6) is
the tire according to the present invention (5), wherein the 30°Ctan δ is 0.15 or less.

The present invention (7) is
the tire of any combination of the present inventions (1) to (6), wherein the content of the carbon black is more than 20 parts by mass with respect to 100 parts by mass of the rubber component.

The present invention (8) is
the tire of any combination of the present inventions (1) to (7), wherein the ratio of the content of silica to the content of carbon black is 2.0 or more.

The present invention (9) is
the tire of any combination of the present inventions (1) to (8), wherein the rubber composition constituting the cap rubber layer has a glass transition temperature Tg (°C) of lower than -30°C.

The present invention (10) is
the tire of any combination of the present inventions (1) to (9), wherein the cap rubber layer contains a resin component, and the resin component is selected from the group consisting of rosin-based resin, styrene-based resin, coumarone-based resin, terpene-based resin, C5 resin, C9 resin, C5C9 resin, and acrylic resin.

The present invention (11) is
the tire according to the present invention (10), wherein the content of the resin component in the rubber composition forming the cap rubber layer is 2 parts by mass or more with respect to 100 parts by mass of the rubber component.

The present invention (12) is
the tire of any combination of the present inventions (1) to (11), wherein the loss tangent (0°C tan δ) of the rubber composition forming the cap rubber layer measured under conditions of temperature of 0°C, frequency of 10 Hz, initial strain of 5%, dynamic strain rate of 1%, and deformation mode: tensile is 0.30 or less.

The present invention (13) is
the tire of any combination of the present inventions (1) to (12), wherein the tread portion is multilayered by providing a base rubber layer inside the cap rubber layer, and the thickness of the cap rubber layer is 10% or more of the thickness of the entire tread portion.

The present invention (14) is
the tire of any combination of the present inventions (1) to (13), wherein the land ratio of the tread portion is 55% or more, and the product of the land ratio (%) and the SBR content (parts by mass) having a styrene content of 25% by mass or less in 100 parts by mass of the rubber component of the cap rubber layer is 4400 or less.

The present invention (15) is
the tire of any combination of the present inventions (1) to (14), wherein the aspect ratio is 30% or more and 60% or less, and the product of the content (parts by mass) of the filler with respect to 100 parts by mass of the rubber component

and the aspect ratio (%) is 9100 or less.

## Claims

1. A tire having a tread portion, wherein

   the cap rubber layer forming the tread portion is formed from a rubber composition containing 40 parts by mass or more and 80 parts by mass or less of styrene-butadiene rubber (SBR) having a styrene content of 25% by mass or less in 100 parts by mass of the rubber component, containing silica and carbon black together with the rubber component, and having the loss tangent 30°C tan δ of less than 0.25 measured under the conditions of temperature of 30°C, frequency of 10 Hz, initial strain of 5%, dynamic strain rate of 1%, and deformation mode: tensile;
   in the rubber composition, the carbon black content is more than 15 parts by mass with respect to 100 parts by mass of the rubber component, and the ratio of the silica content to the carbon black content is 1 or more;
   and the thickness of the tread portion is 15 mm or less.

2. The tire according to claim 1, wherein the styrene-butadiene rubber (SBR) has a styrene content of 20% by mass or less.

3. The tire according to claim 2, wherein the styrene-butadiene rubber (SBR) has a styrene content of 15% by mass or less.

4. The tire according to any one of claims 1-3, wherein the content of the styrene-butadiene rubber (SBR) in 100 parts by mass of the rubber component is 50 parts by mass or more and 70 parts by mass or less.

5. The tire according to any one of claims 1-4, wherein the 30°Ctan δ is 0.20 or less.

6. The tire according to claim 5, wherein the 30°Ctan δ is 0.15 or less.

7. The tire according to any one of claims 1-6, wherein the content of the carbon black is more than 20 parts by mass with respect to 100 parts by mass of the rubber component.

8. The tire according to any one of claims 1-7, wherein the ratio of the content of silica to the content of carbon black is 2.0 or more.

9. The tire according to any one of claims 1-8, wherein the rubber composition constituting the cap rubber layer has a glass transition temperature Tg (°C) of lower than -30°C.

10. The tire according to any one of claims 1-9, wherein the cap rubber layer contains a resin component, and the resin component is selected from the group consisting of rosin-based resin, styrene-based resin, coumarone-based resin, terpene-based resin, C5 resin, C9 resin, C5C9 resin, and acrylic resin.

11. The tire according to claim 10, wherein the content of the resin component in the rubber composition forming the cap rubber layer is 2 parts by mass or more with respect to 100 parts by mass of the rubber component.

12. The tire according to any one of claims 1-11, wherein the loss tangent (0°C tan δ) of the rubber composition forming the cap rubber layer measured under conditions of temperature of 0°C, frequency of 10 Hz, initial strain of 5%, dynamic strain rate of 1%, and deformation mode: tensile is 0.30 or less.

13. The tire according to any one of claims 1-12, wherein the tread portion is multilayered by providing a base rubber layer inside the cap rubber layer, and the thickness of the cap rubber layer is 10% or more of the thickness of the entire tread portion.

14. The tire according to any one of claims 1-13, wherein the land ratio of the tread portion is 55% or more, and the product of the land ratio (%) and the SBR content (parts by mass) having a styrene content of 25% by mass or less in 100 parts by mass of the rubber component of the cap rubber layer (the land ratio × the SBR content) is 4400 or less.

**15.** The tire according to any one of claims 1-14, wherein the aspect ratio is 30% or more and 60% or less, and the product of the content (parts by mass) of the filler with respect to 100 parts by mass of the rubber component and the aspect ratio (%) (the content of the filler $\times$ the aspect ratio) is 9100 or less.

Europäisches Patentamt
European Patent Office
Office européen des brevets

# EUROPEAN SEARCH REPORT

Application Number
EP 23 17 6209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2021/215278 A1 (SUMITOMO RUBBER IND [JP]) 28 October 2021 (2021-10-28)<br>* claims 1-13; examples 1-11 *<br>& EP 4 137 331 A1 (SUMITOMO RUBBER IND [JP]) 22 February 2023 (2023-02-22)<br>----- | 1,4-6, 8-15<br>2,3,7 | INV.<br>B60C1/00<br>C08F236/10<br>C08L9/06<br>C08L15/00 |
| A | EP 3 763 547 A1 (SUMITOMO RUBBER IND [JP]) 13 January 2021 (2021-01-13)<br>* claims 1-10; examples 1-8 *<br>----- | 1-7 | |
| A | JP 2021 028400 A (SUMITOMO RUBBER IND) 25 February 2021 (2021-02-25)<br>* the whole document *<br>----- | 1-15 | |

| TECHNICAL FIELDS SEARCHED (IPC) |
|---|
| B60C<br>C08F<br>C08L |

The present search report has been drawn up for all claims

| Place of search | Date of completion of the search | Examiner |
|---|---|---|
| Munich | 26 October 2023 | Höfler, Thomas |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 6209

This annex lists the patent family members relating to the patent documents cited in the above-mentioned European search report.
The members are as contained in the European Patent Office EDP file on
The European Patent Office is in no way liable for these particulars which are merely given for the purpose of information.

26-10-2023

| Patent document cited in search report | Publication date | Patent family member(s) | Publication date |
|---|---|---|---|
| WO 2021215278 A1 | 28-10-2021 | CN 115038596 A | 09-09-2022 |
| | | EP 4137331 A1 | 22-02-2023 |
| | | JP 6863503 B1 | 21-04-2021 |
| | | JP 2021172212 A | 01-11-2021 |
| | | US 2023219370 A1 | 13-07-2023 |
| | | WO 2021215278 A1 | 28-10-2021 |
| EP 3763547 A1 | 13-01-2021 | CN 112074422 A | 11-12-2020 |
| | | EP 3763547 A1 | 13-01-2021 |
| | | JP 6838587 B2 | 03-03-2021 |
| | | JP 2020029146 A | 27-02-2020 |
| | | US 2021347206 A1 | 11-11-2021 |
| | | WO 2020039778 A1 | 27-02-2020 |
| JP 2021028400 A | 25-02-2021 | JP 2021028400 A | 25-02-2021 |
| | | JP 2022075724 A | 18-05-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011093386 A
- JP 2013079017 A
- JP 2016037100 A
- JP 2010111753 A
- US 4414370 A
- JP 59006207 A
- JP 5058805 B
- JP 1313522 A
- US 5010166 B

### Non-patent literature cited in the description

- **TOA.** *Synthetic Research Annual Report TREND,* 2000, vol. 3, 42-45